# EUROPEAN PATENT APPLICATION

(11) **EP 2 334 023 A1**
(43) Date of publication of application: **15.06.2011**
(21) Application number: 09817263.8
(22) Date of filing: 25.09.2009
(51) Int. Cl.: H04L 29/06

(54) **METHOD, EQUIPMENT AND SYSTEM FOR CONFIGURING A SERVICE AREA IDENTIFIER**

(30) Priority: 26.09.2008 CN 200810166830
(71) Applicant: Huawei Technologies Co., Ltd., Shenzhen, Guangdong Province 518129 (CN)
(72) Inventor: WU, Jian, Shenzhen Guangdong 518129 (CN)
(74) Representative: Thun, Clemens
(86) International application number: PCT/CN2009/074231
(87) International publication number: WO 2010/037349

(57) **Abstract**

In the field of communications, a method, a device, and a system for configuring a Service Area Identifier (SAI) are disclosed. The method includes: receiving signaling of a service; detecting a the service type according to the signaling of the service; and filling a dedicated SAI corresponding to the service in a Radio Access Network Application Part (RANAP) message according to the service type. The device includes a configuration module, a receiving module, a detection module, and a filling module. The system includes the device for configuring an SAI. An Access Point (AP) includes the device for configuring an SAI. An Access Gateway (AG) includes the device for configuring an SAI. By configuring the dedicated SAI for the same type service, the problem that it is difficult to configure the SAI is solved, and requirements of different services for configuring the SAI may be flexibly satisfied.

## Description

This application claims priority to Chinese Patent application No. 200810166830. 6, filed with the Chinese Patent Office on September 26, 2008 and entitled "METHOD, DEVICE AND SYSTEM FOR CONFIGURING SERVICE AREA IDENTIFIER", which is incorporated herein by reference in its entirety.

### FIELD OF THE INVENTION

The present invention relates to the field of communications, and in particular, to a method, a device, and a system for configuring a Service Area Identifier (SAI).

### BACKGROUND OF THE INVENTION

In a conventional Universal Mobile Telecommunications System (UMTS) network, SAIs are configured according to macro-network cells. Only one SAI is configured for each cell. The SAI is configured to identify the cell by a Core Network (CN), which is equivalent to a Global Cellular Identity (GCI) in a Global System for Mobile Communication (GSM).

In the conventional UMTS network, the SAI is mainly used for an emergency call service, a location service, and a migration service. Furthermore, as only one SAI is configured for each cell in the conventional UTMS network, the emergency call service, the location service and the migration service in each cell are implemented by the same SAI.

In the implementation of the present invention, the inventor finds that the prior art at least has the following defect.

The method for configuring the SAI in the conventional UMTS network cannot satisfy requirements of different services.

### SUMMARY OF THE INVENTION

The present invention provides a method, a device, and a system for configuring an SAI.

An embodiment of the present invention provides a method for configuring an SAI, wherein the method includes:
receiving signaling of a service;
detecting a service type according to the signaling of the service; and
filling a dedicated SAI corresponding to the service in a Radio Access Network Application Part, RANAP, message according to the service type, wherein the dedicated SAI is pre-configured.

An embodiment of the present invention further provides a device for configuring an SAI, wherein the device includes:
a receiving module, configured to receive signaling of a service;
a detection module, configured to detect the service type according to the signaling of the service received by the receiving module; and
a filling module, configured to fill a dedicated SAI corresponding to the service in a Radio Access Network Application Part, RANAP, message according to the service type detected by the detection module, wherein the dedicated SAI is pre-configured.

An embodiment of the present invention further provides a communication system, where the system includes the device for configuring an SAI.

An embodiment of the present invention further provides an Access Point (AP), where the AP includes the device for configuring an SAI.

An embodiment of the present invention further provides an Access Gateway (AG), where the AG includes the device for configuring an SAI.

The technical solutions of the present invention have the following beneficial effect.

By configuring a dedicated SAI for the same type service, the problem that it is difficult to configure the SAI is solved, and requirements of different services for configuring the SAI may be flexibly satisfied.

### BRIEF DESCRIPTION OF THE DRAWINGS

FIG. 1 is a flow chart of a method for configuring an SAI according to an embodiment of the present invention;
FIG. 2 is a flow chart of operation using an emergency call dedicated SAI when a user equipment (UE) initiates an emergency call service to an AP according to an embodiment of the present invention;
FIG. 3 is a schematic structural view of a device for configuring an SAI according to another embodiment of the present invention;
FIG. 4 is a schematic structural view of a configuration module in a device for configuring an SAI according to another embodiment of the present invention;
FIG. 5 is a schematic structural view of an AP according to another embodiment of the present invention;
FIG. 6 is a schematic structural view of a configuration module in an AP according to another embodiment of the present invention;
FIG. 7 is a schematic structural view of an AG according to another embodiment of the present invention; and
FIG. 8 is a schematic structural view of a configuration module in an AG according to another embodiment of the present invention.

### DETAILED DESCRIPTION OF THE EMBODIMENTS

In order to make the objectives, technical solutions, and advantages of the present invention more comprehensible, the present invention is described in further detail in the following with reference to the accompanying drawings.

In an AP network, an emergency call service, a location service, and a migration service require using an SAI, and a differentiated charging service also requires using an SAI. That is to say, in the AP network, if SAIs are configured according to macro-network cells and only one SAI is configured for each cell, the emergency call service, the location service, the migration service and the differentiated charging service in each cell all need to be implemented by the same SAI. However, different services such as the emergency call service, the location service, the migration service and the differentiated charging service have different requirements for configuring the SAI of the AP. For example, the emergency call service requires the SAI to support a call center route. The call center route which is a route that routes the emergency call to a nearest call center. Routing of the emergency call to the nearest call center is configured and implemented by a Mobile Switching Center (MSC) according to a Service Area Code (SAC). At present, the number of SACs supported by the MSC of some operators is limited. The SAI=Public Land Mobile Network Identifier (PLMN_ID) + Location Area Code (LAC) + SAC. Therefore, the number of SAIs is not configured too large. The location service requires the SAI to support a certain location precision. The AP is located through the SAI. The operators usually require the location precision not to be less than a macro network. Therefore, the number of SAIs requiring to be configured may be large. It can be seen from the above that, different services have different requirements for configuring the SAI of the AP and some services have opposite requirements for configuring the SAI of the AP. If the SAI of the AP is configured according to the macro-network cell, the SAI of the AP cannot satisfy requirements of different services, which results in that it is difficult to configure the SAI of the AP.

In order to satisfy the requirements of different services for configuring the SAI, an embodiment of the present invention provides a method for configuring a dedicated SAI for the same type service. The method includes: detecting initiation of a service; detecting a type of the service according to detected signaling of the service; and filling a dedicated SAI corresponding to the service in an RANAP message according to the detected type of the service.

The method according to the embodiment of the present invention may be applied to an AP network or a UMTS network, or communication networks of other modes such as GSM and Code-Division Multiple Access (CDMA). The method is described in detail in the following by taking its application to the AP network as an example.

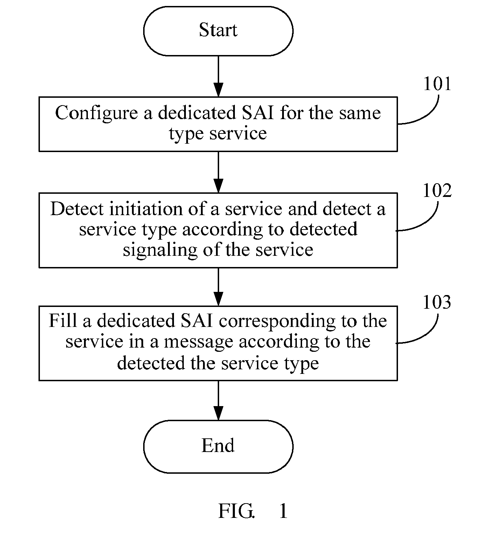

Referring to FIG. 1, an embodiment of the present invention provides a method for configuring an SAI, which is configured to configure an SAI according to a service type, detect whether a service is initiated and a service type, and fill a dedicated SAI corresponding to the service in a message according to the service type, and the method specifically includes the following steps.

In Step 101, an SAI is configured according to a service type, and a dedicated SAI is configured for the same type service.

The dedicated SAI may be configured for the same type service by the following methods.

An area is defined according to a macro-network cell or an administration area. The dedicated SAI is configured for the same type service in the area, wherein one area may contain a plurality of APs. According to the number of service types in the area, the number of dedicated SAIs corresponding to the service types is configured.

It should be noted that, when the area is defined according to the macro-network cell, one macro-network cell may be defined as the area, or several macro-network cells may be defined as the area.

Alternatively, through configuration in the unit of an AP, the dedicated SAI may be configured for the same type service in each AP. For example, according to the number of service types included in the AP, the number of dedicated SAIs corresponding to the service types may be configured.

Alternatively, an operator provides the dedicated SAI for the same type service, and according to the number of service types, the number of dedicated SAIs corresponding to the service types may be determined.

When the dedicated SAI is configured for the same type service, the above methods may be flexibly selected for configuration according to the service type and actual condition. For example, a method for configuring an emergency call dedicated SAI for the emergency call service may include: defining an area according to a macro-network cell or an administration area, configuring an emergency call dedicated SAI for the emergency call service in the area, and configuring a route corresponding to the dedicated SAI on an MSC. For another example, a method for configuring a location dedicated SAI for the location service may include: defining an area according to a macro-network cell, and configuring a location dedicated SAI for the location service in the area; or may include: configuring a location dedicated SAI for the location service in each AP, which may provide higher location precision.

Configuring the SAI according to the service type satisfies different requirements of different service types for configuring the SAI. It solves the problem that when SAIs are configured according to macro-network cells and only one SAI is configured for each cell, different requirements of different service types for configuring the SAI cannot be satisfied.

In Step 102, the AP detects initiation of a service, and after the AP detects that the initiation of the service, the AP may detect a service type according to detected signaling of the service.

Specifically, the AP may detect whether the service is initiated through signaling of the service. When the AP receives the signaling of the service, it indicates that the AP detects that the service is initiated. Furthermore, the detecting the service type according to the detected signaling of the service may be that: the signaling of the service contains an identifier indicating the service type, and the service type may be detected according to the identifier contained in the signaling of the service; or different forms of the signaling of the service are configured for different service types, and the service type may be detected according to the forms of the signaling of the service.

In Step 103, the AP fills the pre-configured dedicated SAI corresponding to the service in a message according to the detected service type, wherein the message may be an RANAP message.

For example, when a UE initiates an emergency call service to the AP, the AP detects that the service is initiated, and may detect that the service type is the emergency call service according to the signaling of the emergency call service, and accordingly fill an emergency call dedicated SAI in an Initial UE Message; then the MSC may route the call to an emergency call center (usually the nearest) corresponding to the emergency call dedicated SAI according to the emergency call dedicated SAI. It should be noted that, as for the emergency call service, the emergency call dedicated SAI filled in the Initial UE Message may be an SAI of a macro network of the AP. In this way, an emergency call configuration of a CN of the existing macro network does not need to be modified, and other services are not influenced. For another example, when the CN initiates a location service to the AP, the AP may detect that the service is the location service according to the signaling of the location service, and fill a location dedicated SAI in a Location Report message.

It should be noted that, both the Initial UE Message and the Location Report message may belong to the RANAP message.

It also should be noted that, Step 101 may not be repeatedly performed, that is to say, after the dedicated SAI is configured for the same type service, only Steps 102 and 103 are repeatedly performed in the specific application process.

Furthermore, it should be noted that, the method according to the embodiment of the present invention may also be implemented by an AG or an intermediate network element between the AP and the CN instead of the AP.

According to the method of the embodiment of the present invention, by configuring the dedicated SAI for the same type service, the problem that it is difficult to configure the SAI is solved, and requirements of different services for configuring the SAI may be flexibly satisfied.

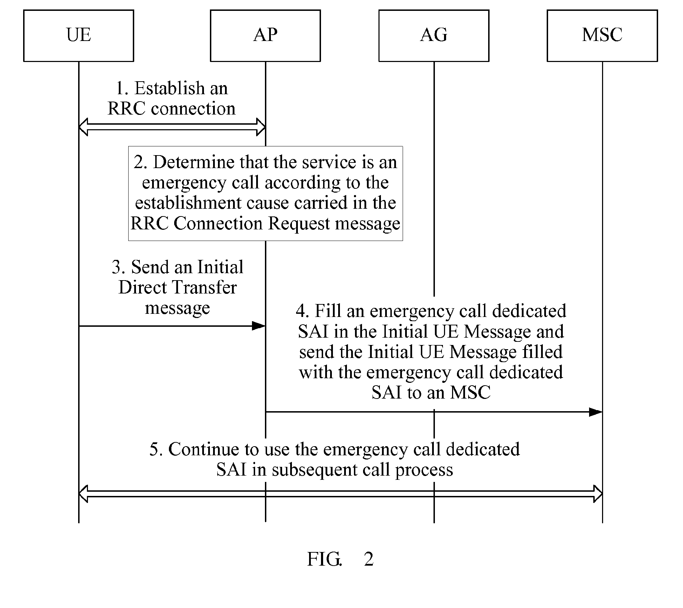

The method according to the embodiment of the present invention is further described in the following by taking the application of the method to a scenario that a UE initiates an emergency call service to an AP as an example. Referring to FIG. 2, the method includes the following steps.
1: A Radio Resource Control (RRC) connection is established between the UE and the AP, wherein an establishment cause carried in an RRC Connection Request message sent by the UE to the AP is emergency call.
2: The AP determines that the service is an emergency call according to the establishment cause carried in the RRC Connection Request message.
3: The UE sends an Initial Direct Transfer message to the AP.
4: After receiving the Initial Direct Transfer message, the AP fills an emergency call dedicated SAI in the Initial UE Message and sends the Initial UE Message filled with the emergency call dedicated SAI to an MSC.
5: The emergency call dedicated SAI is continued to be used in subsequent emergency calls of the UE and the MSC.

The format of the Initial UE Message may be as shown in Table 1.meaning of abbreviations in table 1 is explained respectively as follows: IE is Information Element, NAS is Non Access Stratum, LAI is Location Area Identifier, RAC is Router Area Code, NAS-PDU is Non Access Stratum-Protocol Data unit, RNC is Radio Network Control, GSM is Global System for Mobile Communications, and EDGE is Enhanced Data rate for GSM Evolution.

Filling the emergency call dedicated SAI in an SAI field of the Initial UE Message. Specifically, the SAIs of different services may be denoted by different codes, so as to distinguish the SAIs of different services; for example, the code of the emergency call dedicated SAI may be set to 1001, and the location dedicated SAI may be set to 1002. But the present invention is not limited thereto, and other methods may be used to distinguish the SAIs.

**Table 1**

| **IE/Group Name** | **Presence** | **Range** | **IE type and reference** | **Semantics description** | **Criticality** | **Assigned Criticality** |
|---|---|---|---|---|---|---|
| Message Type | M (Mandatory) | | 9.2.1.1 | | YES | Ignore |
| CN Domain Indicator | M | | 9.2.1.5 | | YES | ignore |
| LAI | M | | 9.2.3.6 | | YES | ignore |
| RAC | C (Conditional) - ifPS | | 9.2.3.7 | | YES | ignore |
| SAI | M | | 9.2.3.9 | | YES | ignore |
| NAS-PDU | M | | 9.2.3.5 | | YES | ignore |
| Iu Signaling Connection Identifier | M | | 9.2.1.38 | | YES | ignore |
| Global RNC-ID | M | | 9.2.1.39 | | YES | ignore |
| GERAN Classmark | O (Optional) | | 9.2.1.57 | | YES | ignore |
| Selected PLMN Identity | O | | 9.2.3.33 | | YES | ignore |
| NAS Sequence Number | O | | 9.2.3.34 | | YES | ignore |
| Permanent NAS UE Identity | O | | 9.2.3.1 | | YES | ignore |
| Redirect Attempt Flag | O | | 9.2.3.50 | | YES | ignore |

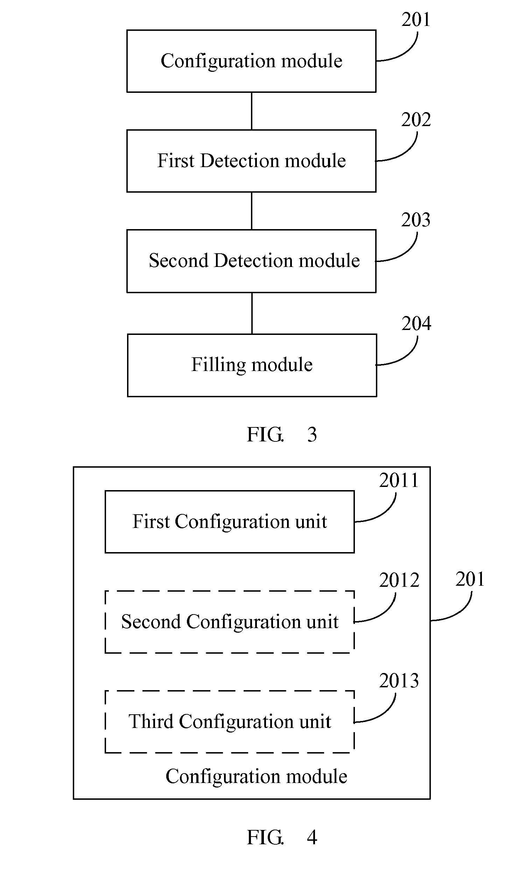

Referring to FIG. 3, another embodiment of the present invention further provides a device for configuring an SAI, which includes a configuration module 201, a first detection module 202, a second detection module 203, and a filling module 204.

The configuration module 201 is configured to configure a dedicated SAI for the same type service.

The first detection module 202 is configured to detect initiation of a service.

Specifically, the first detection module 202 may detect whether the service is initiated through signaling of the service. When the first detection module 202 receives the signaling of the service, it indicates that the first detection module 202 detects that the initiation of the service.

The second detection module 203 is configured to detect a service type according to the signaling of the service detected by the first detection module 202.

Specifically, when the first detection module 202 detects the initiation of the service, that is, the first detection module 202 receives the signaling of the service, the second detection module 203 may detect the service type according to the detected signaling of the service.

The filling module 204 is configured to fill a dedicated SAI corresponding to the service in a message according to the service type detected by the second detection module 203, and the message may be an RANAP message.

Furthermore, referring to FIG. 4, the configuration module 201 includes a first configuration unit 2011, a second configuration unit 2012, or a third configuration unit 2013.

The first configuration unit 2011 is configured to define an area according to a macro-network cell or an administration area, and configure a dedicated SAI for the same type service in the area.

The second configuration unit 2012 is configured to configure a dedicated SAI for the same type service in each network element.

The third configuration unit 2013 is configured to be used by an operator to provide a dedicated SAI corresponding to the same type service.

Furthermore, the device may be an AP, an AG, or an intermediate network element between an AP and a CN.

According to the device of the embodiment of the present invention, by configuring the dedicated SAI for the same type service, the problem that it is difficult to configure the SAI is solved, and requirements of different services for configuring the SAI may be flexibly satisfied.

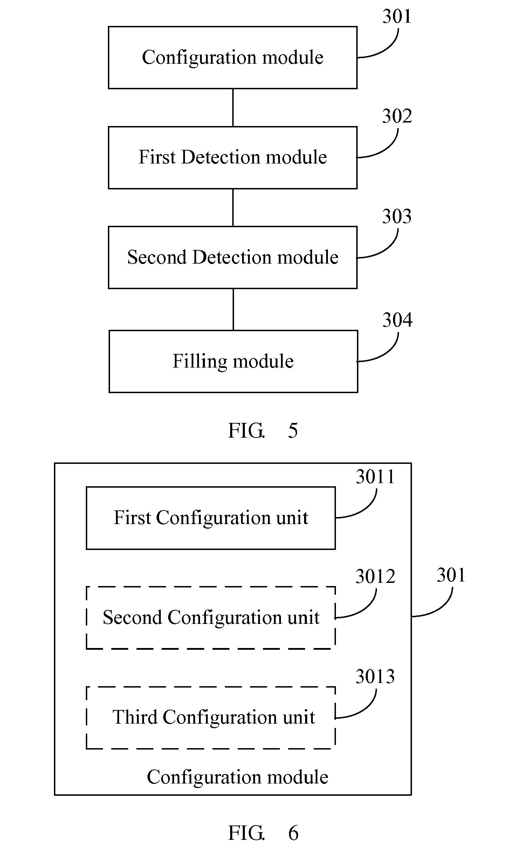

Referring to FIG. 5, another embodiment of the present invention further provides an AP, which includes a configuration module 301, a first detection module 302, a second detection module 303, and a filling module 304.

The configuration module 301 is configured to configure a dedicated SAI for the same type service.

The first detection module 302 is configured to detect initiation of a service.

Specifically, the first detection module 302 may detect whether the service is initiated through signaling of the service. When the first detection module 302 receives the signaling of the service, it indicates that the first detection module 302 detects the initiation of the service.

The second detection module 303 is configured to detect the service type according to the signaling of the service detected by the first detection module 302.

Specifically, when the first detection module 302 detects the initiation of the service, that is, the first detection module 302 receives the signaling of the service, the second detection module 303 may detect the service type according to the detected signaling of the service.

The filling module 304 is configured to fill a dedicated SAI corresponding to the service in a message according to the service type detected by the second detection module 303, and the message may be an RANAP message.

Furthermore, referring to FIG. 6, the configuration module 301 includes a first configuration unit 3011, a second configuration unit 3012, or a third configuration unit 3013.

The first configuration unit 3011 is configured to define an area according to a macro-network cell or an administration area, and configure a dedicated SAI for the same type service in the area.

The second configuration unit 3012 is configured to configure a dedicated SAI for the same type service in each network element.

The third configuration unit 3013 is configured to be used by an operator to provide a dedicated SAI corresponding to the same type service.

According to the AP of the embodiment of the present invention, by configuring the dedicated SAI for the same type service, the problem that it is difficult to configure the SAI is solved, and requirements of different services for configuring the SAI may be flexibly satisfied.

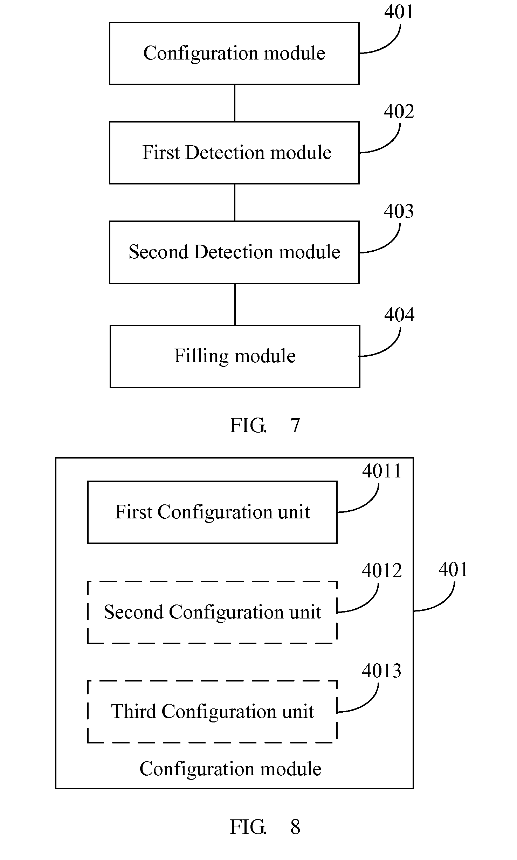

Referring to FIG. 7, another embodiment of the present invention further provides an AG, which includes a configuration module 401, a first detection module 402, a second detection module 403, and a filling module 404.

The configuration module 401 is configured to configure a dedicated SAI for the same type service.

The first detection module 402 is configured to detect initiation of a service.

Specifically, the first detection module 402 may detect whether the service is initiated through signaling of the service. When the first detection module 402 receives the signaling of the service, it indicates that the first detection module 402 detects the initiation of the service.

The second detection module 403 is configured to detect a service type according to the signaling of the service detected by the first detection module 402.

Specifically, when the first detection module 402 detects the initiation of the service, that is, the first detection module 402 receives the signaling of the service, the second detection module 403 may detect the service type according to the detected signaling of the service.

The filling module 404 is configured to fill a dedicated SAI corresponding to the service in a message according to the service type detected by the second detection module 403, and the message may be an RANAP message.

Furthermore, referring to FIG. 8, the configuration module 401 includes a first configuration unit 4011, a second configuration unit 4012, or a third configuration unit 4013.

The first configuration unit 4011 is configured to define an area according to a macro-network cell or an administration area, and configure a dedicated SAI for the same type service in the area.

The second configuration unit 4012 is configured to configure a dedicated SAI for the same type service in each network element.

The third configuration unit 4013 is configured to be used by an operator to provide a dedicated SAI corresponding to the same type service.

According to the AG of the embodiment of the present invention, by configuring the dedicated SAI for the same type service, the problem that it is difficult to configure the SAI is solved, and requirements of different services for configuring the SAI may be flexibly satisfied.

Another embodiment of the present invention further provides a communication system, wherein the system may include the device of the embodiment as shown in FIG. 2. All or a part of content of the technical solutions according to the embodiments of the present invention may be implemented by software programming. The software program may be stored in a readable storage medium, such as a hard disk, an optical disk, and a floppy disk in a computer.

The above descriptions are merely preferred embodiments of the present invention, but are not intended to limit the present invention. Any modification, equivalent replacement, or improvement made without departing from the spirit and principle of the present invention should fall within the scope of the present invention.

## Claims

1. A method for configuring a Service Area Identifier, SAI, comprising:
receiving signaling of a service;
detecting a service type according to the signaling of the service; and
filling a dedicated SAI corresponding to the service in a Radio Access Network Application Part, RANAP, message according to the service type, wherein the dedicated SAI is pre-configured.

2. The method for configuring an SAI according to claim 1, wherein before the receiving the signaling of the service, the method further comprises:
configuring the dedicated SAI for the same type service.

3. The method for configuring an SAI according to claim 1, wherein the configuring the dedicated SAI for the same type service comprises:
defining an area according to a macro-network cell or an administration area, and configuring the dedicated SAI for the same type service in the area; or
configuring the dedicated SAI for the same type service in each network element; or
providing, by an operator, the dedicated SAI corresponding to the same type service.

4. The method for configuring an SAI according to claim 2, wherein the network element comprises: an Access Point, AP, or an Access Gateway, AG, or an intermediate network element between an AP and a Core Network, CN.

5. The method for configuring an SAI according to claim 1, wherein the service comprises:
an emergency call service, or a location service, or a migration service, or a differentiated charging service.

6. A device for configuring a Service Area Identifier, SAI, comprising:
a receiving module, configured to receive signaling of a service;
a detection module, configured to detect the service type according to the signaling of the service received by the receiving module; and
a filling module, configured to fill a dedicated SAI corresponding to the service in a Radio Access Network Application Part, RANAP, message according to the service type detected by the detection module, wherein the dedicated SAI is pre-configured.

7. The device for configuring an SAI according to claim 6, further comprising:
a configuration module, configured to configure the dedicated SAI for the same type service.

8. The device for configuring an SAI according to claim 6, wherein the configuration module comprises:
a first configuration unit, configured to define an area according to a macro-network cell or an administration area, and configure the dedicated SAI for the same type service in the area; or
a second configuration unit, configured to configure the dedicated SAI for the same type service in each network element; or
a third configuration unit, configured to be used by an operator to provide the dedicated SAI corresponding to the same type service.

9. The device for configuring an SAI according to claim 6, wherein the network element comprises: an Access Point, AP, or an Access Gateway, AG, or an intermediate network element between an AP and a Core Network, CN.

10. A communication system, comprising the device for configuring an SAI according to any one of claims 6 to 9.

11. An Access Point, AP, comprising the device for configuring an SAI according to any one of claims 6 to 9.

12. An Access Gateway, AG, comprising the device for configuring an SAI according to any one of claims 6 to 9.
